(19) Europäisches Patentamt / European Patent Office / Office européen des brevets

(11) **EP 3 628 986 B1**

(12) **EUROPÄISCHE PATENTSCHRIFT**

(45) Veröffentlichungstag und Bekanntmachung des Hinweises auf die Patenterteilung:
**04.05.2022 Patentblatt 2022/18**

(21) Anmeldenummer: **19197267.8**

(22) Anmeldetag: **13.09.2019**

(51) Internationale Patentklassifikation (IPC):
***G01G 19/08*** *(2006.01)*

(52) Gemeinsame Patentklassifikation (CPC):
**G01G 19/083; G01G 19/08**

(54) **VERFAHREN ZUM ABLADEN EINER NUTZLAST**

METHOD FOR UNLOADING A PAYLOAD

PROCÉDÉ DE DÉCHARGE D'UNE CHARGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2018 DE 102018216372**

(43) Veröffentlichungstag der Anmeldung:
**01.04.2020 Patentblatt 2020/14**

(73) Patentinhaber: **Deere & Company**
**Moline, IL 61265 (US)**

(72) Erfinder:
• **Stark, Sebastian**
  **68163 Mannheim (DE)**
• **Ballaire, Frederic**
  **68163 Mannheim (DE)**
• **Bechtold, Patrick**
  **68163 Mannheim (DE)**
• **Wehle, Andreas**
  **68163 Mannheim (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(56) Entgegenhaltungen:
**US-A1- 2016 047 689**

## Beschreibung

Die Erfindung betrifft ein Verfahren zum Abladen einer Nutzlast an einer Ladestelle mit den Merkmalen des Oberbegriffs von Patentanspruch 1.

Aus DE 10 2013 203 826 A1 ist eine Arbeitsmaschine mit einer Hubvorrichtung zum Heben und Senken einer Nutzlast bekannt. Dabei kann über eine Wiegeeinrichtung mittels einer Sensorik die Masse der Nutzlast kontinuierlich ermittelt werden. Die Hubvorrichtung weist eine Aufnahmeeinheit in Form einer Laderschaufel auf, um die Nutzlast transportieren und abladen zu können.

Des Weiteren ist in der US 2016/0047689 A1 ein Verfahren zum Verwalten von Ladevorgängen eines Radladers mit einer Schaufel offenbart. Ein Nutzlastüberwachungssystem dient der Überwachung der Ladezyklen des Radladers, wobei aus einer inkrementellen Anzahl entleerter Schaufelladungen eine Gesamtmenge verladenen Materials ermittelt wird. Zum Starten eines Ladezyklus gibt der Bediener über einen Touchscreen den zu verladenden Materialtyp sowie ein gewünschtes Gesamtzielgewicht vor. Auf Grundlage einer Gewichtsbestimmung des in der Schaufel befindlichen Materials erfolgt eine Beurteilung, ob die Schaufel gerade befüllt oder entleert ist. Diese Information wird zur Erhöhung eines der Anzahl entleerter Schaufelladungen entsprechenden inkrementalen Zählers herangezogen.

Die Aufgabe der vorliegenden Erfindung ist es, das Abladen einer Nutzlast an einer Ladestelle für einen Anwender komfortabler zu gestalten.

Diese Aufgabe wird durch ein Verfahren mit den Merkmalen des Patentanspruchs 1 gelöst.

Weitere vorteilhafte Ausgestaltungen des erfindungsgemäßen Verfahrens gehen aus den Unteransprüchen hervor.

Gemäß Patentanspruch 1 wird bei dem Verfahren zum Abladen einer Nutzlast an einer Ladestelle (z.B. Anhänger, Ladeplatz auf einem Feld oder an einem Silo) ein Auswahlschritt durchgeführt. Hierbei wird die abzuladende Nutzlast aus unterschiedlichen möglichen Nutzlasten ausgewählt. Die ausgewählte Nutzlast wird als eine Information registriert. Durch ihre Registrierung können der ausgewählten Nutzlast weitere Informationen zugeordnet werden. Zu diesem Zweck werden von der Steuereinheit die folgenden Informationen registriert und mittels einer Anzeigeeinheit signalisiert:

- eine Ziel-Gesamtmenge $m\_sum\_ziel$ der ausgewählten und an der Ladestelle aus einer Aufnahmeeinheit an einer Hubvorrichtung einer Arbeitsmaschine durch Ausschütten abzuladenden Nutzlast als eine Ziel-Mengeneinheit,
- eine an der Ladestelle bereits abgeladene, aktuelle Gesamtmenge $m\_sum\_akt$ der ausgewählten Nutzlast als eine Ist-Mengeneinheit,
- eine Anzahl $n\_KV$ bereits durchgeführter Ablade-Vorgänge, welche einer an der Ladestelle bereits abgeladenen Menge $m\_sum\_akt$ der ausgewählten Nutzlast $L$ entspricht,
- eine Differenz $\Delta m\_sum$ zwischen der Ziel-Mengeneinheit $m\_sum\_ziel$ und der Ist-Mengeneinheit $m\_sum\_akt$.

Hierbei wird die Nutzlast $L(spez\_L)$ bei mindestens einem Ablade-Vorgang aus der Aufnahmeeinheit lediglich anteilig ausgeschüttet wird, um die vorbestimmte Ziel-Gesamtmenge $m\_sum\_ziel$ an der Ladestelle zu erreichen.

Somit werden Ladearbeiten unterstützt, bei denen die Nutzlast bei mindestens einem Ablade-Vorgang aus der Aufnahmeeinheit anteilig ausgeschüttet wird. Beispielsweise erfolgen hintereinander mehrere Ablade-Vorgänge mit jeweils vollständigem Abladen der Nutzlast aus der Aufnahmeeinheit, während der letzte Ablade-Vorgang nur ein teilweises Ausschütten der Nutzlast erfordert, um die vorbestimmte Ziel-Gesamtmenge $m\_sum\_ziel$ an der Ladestelle möglichst exakt zu erreichen. In gleicher Weise ist das Verfahren vorteilhaft bei einer Ladearbeit anwendbar, welche einen einzigen Ablade-Vorgang mit nur anteiligem Ausschütten der Nutzlast aus der Aufnahmeeinheit erfordert, um die vorbestimmte Ziel-Gesamtmenge $m\_sum$-$ziel$ an der Ladestelle möglichst exakt zu erreichen.

Die jeweilige Information wird vorzugsweise in einer Speichereinheit und/oder Steuereinheit registriert und weiterverarbeitet. Durch die Registrierung sind die Voraussetzungen geschaffen, dass ein Anwender des Verfahrens, z.B. der Führer einer Arbeitsmaschine zum Transportieren und Abladen von Nutzlasten, bei Ladearbeiten mittels geeigneter Assistenzfunktionen unterstützt werden kann. Beispielsweise kann der Anwender mittels einzelner oder sämtlicher der vorgenannten und ggf. weiterer Informationen über den Status der aktuellen Ladearbeit kontinuierlich informiert werden, um die aktuelle Ladearbeit unterbrechen, ohne Informationsverluste wieder weiterführen oder beenden zu können. Auch eine automatische Steuerung einzelner Transport- oder Ladebewegungen der Arbeitsmaschine in Abhängigkeit von einzelnen Informationen ist möglich. Hierdurch wird der Anwender während der Ladearbeit signifikant entlastet.

Die Auswahl der Nutzlast erfolgt insbesondere vor einem ersten Ablade-Vorgang der aktuellen Ladearbeit und die aktuelle Ladearbeit wird dann vollständig durchgeführt. In weiteren Ausführungsformen wird die aktuelle Ladearbeit - u.a. durch Ladearbeiten mit anderen ausgewählten Nutzlasten - unterbrochen und zu einem späteren Zeitpunkt weitergeführt. Hier kann der Anwender bei Weiterführung der unterbrochenen Ladearbeit zunächst die zugehörige Nutzlast wieder auswählen, so dass er auch über die dieser Nutzlast zugeordneten und registrierten Informationen wieder informiert werden kann. Hierdurch wird der Anwender selbst bei Unterbrechungen von einzelnen Ladearbeiten bei der genauen Abarbeitung jeder Ladearbeit effizient unterstützt.

Wie bereits erwähnt, kann bei einer anstehenden Ladearbeit zeitlich vor einem ersten Ablade-Vorgang eine Nutzlast zwischen unterschiedlichen möglichen Nutzlasten ausgewählt und registriert werden. Zwischen dieser Auswahl und Registrierung einerseits und dem ersten Ablade-Vorgang wird vorzugsweise mindestens ein weiterer Verfahrensschritt durchgeführt. Beispielsweise wird die ausgewählte Nutzlast von einer Arbeitsmaschine aufgenommen und zur Ladestelle transportiert, um dort die aufgenommene Nutzlast abzuladen. Außerdem können vor dem Ablade-Vorgang einzelne Informationen registriert und der ausgewählten Nutzlast zugeordnet und/oder dem Anwender signalisiert werden. Insbesondere die Schritte der Aufnahme, des Transports und des Abladens der ausgewählten Nutzlast können sich im Rahmen derselben Ladearbeit wiederholen, woraus sich die Gesamtanzahl der Ablade-Vorgänge bei dieser Ladearbeit ergibt. Diese Gesamtanzahl der Ablade-Vorgänge ist insbesondere von der bereits genannten Ziel-Gesamtmenge $m\_sum\_ziel$ der ausgewählten und an der Ladestelle abzuladenden Nutzlast abhängig.

Einem Anwender können mehrere, unterschiedliche Nutzlasten zur Auswahl angeboten werden, beispielsweise an einem Display oder Bildschirm. Die zu transportierende und abzuladende Nutzlast wird beispielsweise vor Beginn der aktuellen Ladearbeit durch eine entsprechende Signaleingabe an einer Eingabeeinheit ausgewählt.

Die unterschiedlichen Nutzlasten können durch irgendein unterschiedliches spezifisches Merkmal $spez\_L$ repräsentiert und angeboten werden, z.B. durch Angabe der Art, des Typs oder des Materials der jeweiligen Nutzlast. Die auswählbaren Nutzlasten können Materialien mit unterschiedlichen physikalischen Merkmalen bzw. Eigenschaften sein. Sie können unterschiedliche Aggregatzustände aufweisen. Beispielsweise kann es sich bei der Nutzlast um eine Flüssigkeit, Saatgut, Tierfutter, Ballen (z.B. Stroh oder Heu oder unterschiedliche Ballengrößen), Erdreich, Sand oder Steingemisch wie Schotter, Kies und dergleichen handeln.

Die Ziel-Gesamtmenge $m\_sum\_ziel$ der ausgewählten Nutzlast für die aktuelle Ladearbeit kann als eine oder mehrere Ziel-Mengeneinheit(en) registriert werden. Ebenso kann die bereits abgeladene, aktuelle Gesamtmenge $m\_sum\_akt$ der ausgewählten Nutzlast der aktuellen Ladearbeit als eine oder mehrere Ist-Mengeneinheit(en) registriert werden. Abhängig von unterschiedlichen spezifischen Merkmalen $spez\_L$ der Nutzlasten können unterschiedliche Ziel- und Ist-Mengeneinheiten sinnvoll sein. Beispielsweise können im Falle von Ballen als Nutzlast diese als eine Mengeneinheit in Form einer natürlichen Zahl registriert werden. Alternativ oder zusätzlich kann diese Nutzlast als eine Mengeneinheit in Form einer Gewichts- oder Masse-Einheit (z.B. in kg) registriert werden. Bei einer Ladearbeit mit einem spezifischen Gebinde, beispielsweise einem Ballen, als Nutzlast wird dann vorzugsweise die Anzahl der bereits abgeladenen Ballen als eine natürliche Zahl registriert und zusätzlich die ermittelte Masse dieser bereits abgeladenen Ballen registriert.

Die registrierten Informationen werden dem Anwender mittels der Anzeigeeinheit signalisiert, um ihn während der Ladearbeiten weiter zu entlasten. Die Signalisierung erfolgt vorzugsweise über eine geeignete elektronische Einheit, z.B. Bildschirm, Display zum Lesen und/oder Eingeben von Daten. Dabei können einzelne registrierte Informationen von einer Steuereinheit oder von dem Anwender vorgegeben werden. Dies betrifft beispielsweise die Ziel-Gesamtmenge $m\_sum\_ziel$ der an der Ladestelle (vorzugsweise durch mehrere nacheinander erfolgende Ablade-Vorgänge) abzuladenden Nutzlast.

Die Arbeitsmaschine ist insbesondere als ein Nutzfahrzeug ausgebildet. Als Nutzfahrzeuge kommen vorzugsweise Traktoren, Schlepper, Baumaschinen, Radlader, Bagger, Schaufelbagger, Telehandler, Auskippdrohnen in Frage.

Abhängig vom Typ oder der Funktionalität der jeweiligen Arbeitsmaschine kann die Hubvorrichtung zwischen der Arbeitsmaschine und der Aufnahmeeinheit ein einziges, in sich starres Auslegerteil aufweisen oder alternativ mehrere, miteinander beweglich verbundene Auslegerteile aufweisen.

Die Nutzlast ist abhängig von ihrem spezifischen Merkmal $spez\_L$ entweder in oder an der Aufnahmeeinheit befindlich bzw. angeordnet. Hierzu ist die Aufnahmeeinheit entsprechend ausgestaltet. Die Aufnahmeeinheit kann ein beliebiger Behälter zur Aufnahme einer Nutzlast sein. Die Aufnahmeeinheit dient der Aufnahme, dem Transport und dem Abladen der ausgewählten Nutzlast. Die Aufnahmeeinheit ist auf geeignete Weise an der Hubvorrichtung fest oder beweglich fixiert. Beispielsweise ist die Aufnahmeeinheit als eine Schaufel an der Hubvorrichtung gelenkig angeordnet. In einem anderen Fall ist die Aufnahmeeinheit als eine Ladegabel (z.B. für den Transport und das Abladen von Ballen) ausgebildet oder die Aufnahmeeinheit ist an einer Ladegabel unbeweglich angeordnet. Weitere Ausführungsformen der Aufnahmeeinheit sind z.B. zangenartig, insbesondere als Klemmzange, ausgebildet.

Vorliegend wird die Nutzlast aus der Aufnahmeeinheit ausgeschüttet, also beispielsweise ausgekippt, ausgegossen oder abgelassen, und dadurch abgeladen. Hierbei handelt es sich bei der Aufnahmeeinheit insbesondere um einen Behälter für ein beliebiges Schüttgut, beispielsweise eine Flüssigkeit, Saatgut, Tierfutter, Erdreich, Sand oder Steingemisch wie Schotter, Kies und dergleichen. Auch Ballen können bei entsprechender Ausführungsform und Dimensionierung der Aufnahmeeinheit mit letzterer transportiert und aus ihr ausgekippt werden.

Zum Erreichen der Ziel-Gesamtmenge $m\_sum\_ziel$ kann das Verfahren mehrere Ablade-Vorgänge hintereinander oder einen einzigen Ablade-Vorgang enthalten.

Zur Unterstützung eines anteiligen bzw. teilweise Ausschüttens der Nutzlast aus der Aufnahmeeinheit mit hoher Genauigkeit wird ein Ablade-Vorgang - insbesondere der letzte Ablade-Vorgang einer aktuellen Ladearbeit bzw. Ladetätigkeit - in Abhängigkeit von einer Detektion mindestens einer der folgenden Größen beendet:

- eine vorbestimmte Rest-Masse m re der in der Aufnahmeeinheit noch befindlichen Nutzlast,
- eine während des laufenden Ablade-Vorganges ausgeschüttete und vorbestimmte Zuladungs-Masse $\Delta$m_zul.

Mittels geeigneter technischer Mittel (z.B. einer geeigneten Wiegeeinrichtung an der Arbeitsmaschine) kann mathematisch und technisch einfach detektiert werden, ob und wann die vorbestimmte Rest-Masse m_re erreicht ist und/oder die vorbestimmte Zuladungs-Masse m_zul erreicht, d.h. ausgeschüttet ist. Hierdurch bietet das Verfahren eine automatische Schüttfunktion, mit deren Hilfe eine vorbestimmte Ziel-Gesamtmenge m_sum_ziel an einer Arbeits- oder Ladestelle automatisch und mit hoher Genauigkeit erreicht wird. Das Verfahren bietet somit eine vorteilhafte Assistenzfunktion bei Ladearbeiten der Arbeitsmaschine und entlastet den Anwender während der Ladearbeiten erheblich.

Das direkte oder indirekte Detektieren der vorbestimmten Rest-Masse m_re beinhaltet auch die Möglichkeit, dass diese Masse m re mit einer gewissen Ungenauigkeit gegenüber der tatsächlichen Masse der in der Aufnahmeeinheit noch befindlichen Nutzlast detektiert wird. Diese Ungenauigkeit entspricht einem Toleranzbereich, der unterschiedliche Einflussgrößen berücksichtigt wie beispielsweise Eigenschaften der Sensorik einer Wiegeeinrichtung für die Ermittlung einer Masse der Nutzlast, Größe der auszuschüttenden Zuladungs-Masse m_zul, und Eigenschaften der Nutzlast. Analoges gilt für eine direkte oder indirekte Detektion der als ausgeschüttet geltenden, vorbestimmten Zuladungs-Masse m_zul bezüglich einer tatsächlich ausgeschütteten Masse.

Vorzugsweise wird während des Verfahrens eine Masse der in oder an der Aufnahmeeinheit befindlichen Nutzlast ermittelt. Diese Ermittlung einer Masse der Nutzlast kann einmalig oder mehrmalig, insbesondere kontinuierlich, erfolgen. Die ermittelte Masse wird insbesondere als eine Information registriert und dann vorzugsweise auch mittels der bereits genannten Anzeigeeinheit signalisiert.

Insbesondere wird unmittelbar vor dem betrachteten bzw. aktuellen Ablade-Vorgang und/oder während des betrachteten bzw. aktuellen Ablade-Vorganges eine Masse der in oder an der Aufnahmeeinheit befindlichen Nutzlast ermittelt. Davon abgeleitet können weitere Masse-Werte ermittelt werden. Beispielsweise kann die an der Ladestelle während vorangegangener Ablade-Vorgänge bereits abgeladene Menge der ausgewählten Nutzlast als die bereits genannte, aktuelle Gesamtmenge m_sum_akt der Nutzlast ermittelt und registriert werden.

Die Masse der Nutzlast in oder an der Aufnahmeeinheit wird insbesondere mittels einer geeigneten Wiegeeinrichtung an der Arbeitsmaschine ermittelt. Hierbei findet beispielsweise das aus DE 10 2013 203 826 A1 bekannte Verfahren zum Wiegen einer Nutzlast Anwendung.

Die unmittelbar vor dem Start des betrachteten Ablade-Vorganges vorhandene und ermittelte Masse der Nutzlast in oder an der Aufnahmeeinheit kann als eine Start-Masse m_st bezeichnet werden. Sie entspricht einer aktuellen Masse m_akt der Nutzlast in oder an der Aufnahmeeinheit unmittelbar vor dem Start des Ablade-Vorganges. Während des Ablade-Vorganges kann die aktuelle Masse m_akt der in oder an der Aufnahmeeinheit befindlichen Nutzlast einmalig oder mehrfach, z.B. kontinuierlich oder in bestimmten Zeitabständen, ermittelt werden. Der Führer der Arbeitsmaschine, ein Nutzer oder ein elektronisches Steuersystem der Arbeitsmaschine können über die aktuelle Masse m_akt regelmäßig informiert werden.

Die Ermittlung der Start-Masse m_st und/oder der aktuellen Masse m_akt ermöglicht es, mathematisch und technisch einfach zu detektieren, ob und wann die vorbestimmte Rest-Masse m re und/oder die vorbestimmte Zuladungs-Masse m_zul erreicht ist.

Die ermittelte Start-Masse m_st kann mit der vorbestimmten Zuladungs-Masse m_zul verglichen werden. Dieser Vergleich bietet eine steuerungstechnisch einfache Maßnahme für eine Feststellung, ob die unmittelbar vor einem Ablade-Vorgang in oder an der Aufnahmeeinheit befindliche Nutzlast vollständig oder nur anteilig ausgeschüttet werden soll. Wenn m_st $\leq$ m_zul festgestellt wird, kann die Nutzlast vollständig ausgeschüttet werden und der Ablade-Vorgang ist beendet. In diesem Fall ist eine Detektion der Rest-Masse m_re und/oder der ausgeschütteten Zuladungs-Masse m_zul nicht zwingend erforderlich, um eine Beendigung des Ablade-Vorganges einzuleiten.

Die Rest-Masse m_re lässt sich verfahrenstechnisch einfach vorbestimmen, wenn vorher die Start-Masse m_st der vor dem Ablade-Vorgang in der Aufnahmeeinheit befindlichen Nutzlast bekannt ist. Diese Start-Masse m_st entspricht der aktuellen Masse m_akt der Nutzlast unmittelbar vor oder zum Start des Ablade-Vorganges und kann deshalb technisch unaufwändig mit denselben technischen Mitteln (z.B. einer Wiegeeinrichtung) ermittelt werden, mit der auch während des Ablade-Vorganges die aktuelle Masse m_akt ermittelt wird.

Weiterhin wird die Rest-Masse m_re vorzugsweise in Abhängigkeit von der vorbestimmten Zuladungs-Masse m_zul vorbestimmt. Beispielsweise kann die Rest-Masse m_re verhältnismäßig exakt durch die Gleichung

$$m\_re = m\_st - m\_zul$$

vorbestimmt werden.

In einer bevorzugten Ausführungsform wird die aktuelle Masse m_akt der in der Aufnahmeeinheit befindlichen Nutzlast mit der vorbestimmten Rest-Masse m_re verglichen, bevor der Ablade-Vorgang beendet wird. Dieser Vergleich bzw. das Vergleichsergebnis bietet ein steuertechnisch einfaches Kriterium, um während des Ablade-Vorganges zum optimalen Zeitpunkt dessen Beendigung einzuleiten. Um die Genauigkeit des Verfahrensablaufes zu unterstützen, wird die aktuelle Masse m_akt vorzugsweise in definierten oder konstanten Zeitintervallen ermittelt und dann jeweils mit der vorbestimmten Rest-Masse m_re verglichen.

In einer bevorzugten Ausführungsform weist die Hubvorrichtung einen Ausleger auf, welcher um eine erste Schwenkachse relativ zur Arbeitsmaschine schwenkbar gelagert ist. Dabei ist die Aufnahmeeinheit um eine zweite Schwenkachse relativ zum Ausleger schwenkbar gelagert. In diesem Fall kann die aktuelle Masse m_akt während des Ablade-Vorganges oder beim Start des Ablade-Vorganges (Start-Masse m_st) mit technisch einfachen Hilfsmitteln ermittelt werden, indem beispielsweise standardmäßig zur Verfügung stehende Sensormittel und geeignete Algorithmen verwendet werden. Dabei erfolgt die Ermittlung bzw. Berechnung der Masse insbesondere in Abhängigkeit von mindestens einer der folgenden Größen:

einer Masse des Auslegers, einer Masse der Aufnahmeeinheit, einem Drehmoment um die erste Schwenkachse, einem Drehmoment um die zweite Schwenkachse, einem Schwerpunkt der Masse des Auslegers bezüglich der ersten Schwenkachse, einem Schwerpunkt der Masse der Aufnahmeeinheit bezüglich der zweiten Schwenkachse. Die vorgenannten Drehmomente wiederum werden vorzugsweise ermittelt, indem Aktuatorenkräfte (insbesondere Zylinderkräfte) an dem Ausleger berücksichtigt werden. Diese Kräfte können beispielsweise über Drucksensoren ermittelt werden.

Vorzugsweise wird während des Ablade-Vorganges ein Kippwinkel w_k der Aufnahmeeinheit relativ zu einer Bezugsgeraden (z.B. Vertikale oder Horizontale der Arbeitsmaschine oder der Erde) in einer Auskipprichtung verändert. Hierdurch kann mittels eines gesteuerten, sich verändernden Kippwinkels w_k die Genauigkeit bei dem teilweisen Auskippen der Nutzlast aus der Aufnahmeeinheit weiter verbessert werden.

Um einen effizienten Ablade-Vorgang mit hoher Genauigkeit zu unterstützen, erfolgt die Ermittlung der aktuellen Masse m_akt und/oder die Veränderung des Kippwinkels w_k vorzugsweise jeweils nach Ablauf festgelegter Zeitintervalle. Durch eine entsprechende Veränderung des Zeitintervalls kann die Genauigkeit des Ablade-Vorgangs an die Anforderungen der jeweiligen Ladetätigkeit angepasst werden. Diese kontinuierliche Ermittlung und Einstellung aktueller Werte ermöglicht eine hohe Genauigkeit des Ablade-Vorganges auch bei Nutzlasten mit komplexen Eigenschaften (z.B. klebrige Schüttgüter, Schüttgut mit mehreren gemischten Materialien).

In einer weiteren bevorzugten Ausführungsform wird das Erreichen der vorbestimmten Rest-Masse m re und/oder der vorbestimmten Zuladungs-Masse m_zul indirekt in Abhängigkeit von einem Soll-Wert w_soll detektiert. Während des Ablade-Vorganges muss die Aufnahmeeinheit hinsichtlich ihres Kippwinkels w_k dann lediglich auf den Wert w_k = w_soll eingestellt werden. Dies reduziert die Zeitdauer des Ablade-Vorganges selbst und unterstützt einen zeiteffizienten Verfahrensablauf.

Um den Verfahrensablauf bei Verwendung eines Soll-Wertes w_soll des Kippwinkels w_k technisch einfach und anwendungsfreundlich zu halten, wird der Soll-Wert w_soll vorzugsweise anhand von bereitgestellten Kalibrierdaten abgeleitet und festgelegt.

Um die Kalibrierdaten verfahrenstechnisch besonders einfach nutzen zu können, repräsentieren sie vorzugsweise ein Verhältnis zwischen einer Masse der Nutzlast und einem Kippwinkel der Aufnahmeeinheit relativ zu einer Bezugsgeraden. Dabei wird insbesondere die aktuelle Masse m_akt der Nutzlast in der Aufnahmeeinheit bei unterschiedlichen Kippwinkeln w_k aufgenommen und als Kalibrierdaten gespeichert. Dies ermöglicht beim Arbeitsbetrieb eine einfache Umrechnung von einer gewünschten Rest-Masse m_re und/oder Zuladungs-Masse m_zul auf einen Soll-Wert des Kippwinkels w_k.

Die Kalibrierdaten können als Kalibrierdiagramm (z.B. Tabelle oder Kurve) gespeichert werden. Vorzugsweise werden für spezifische Materialien als Nutzlast bzw. Schüttgut jeweils spezifische Kalibrierdaten erstellt. Abgesehen von der spezifischen Art der Nutzlast können bei den Kalibrierdaten auch weitere Merkmale berücksichtigt werden, wie beispielsweise Partikelgeometrien, Temperatur, Feuchtigkeit der Nutzlast, eine Haltedauer des Kippwinkels w_k = w_soll.

Die Kalibrierung kann zeitlich unabhängig von der unmittelbar bevorstehenden Ladetätigkeit erfolgen und die Kalibrierdaten können dann bei Bedarf - z.B. aus einer entsprechenden Materialdatenbank - abgerufen werden. Alternativ können Kalibrierdaten in einem Kalibriervorgang unmittelbar vor der geplanten Ladetätigkeit mit der auszukippenden Nutzlast erstellt und abgespeichert werden. Hierdurch können charakteristische Merkmale der Nutzlast aktuell und exakt in den Kalibrierdaten berücksichtigt werden.

Die Kalibrierung beinhaltet vorzugsweise eine Aufnahme mehrerer Wertepaare. Zwischenwerte können ggf. durch Interpolation generiert werden. Auf diese Weise kann die aktuelle Masse m_akt der Nutzlast in der Aufnahmeeinheit als Funktion des Kippwinkels w_k der Aufnahmeeinheit dargestellt werden.

Während des Ablade-Vorgangs wird vorzugsweise mindestens ein Rüttel-Vorgang durchgeführt. Hierdurch wird erreicht, dass sich die Nutzlast auch bei klebrigen Eigenschaften zuverlässig von der Aufnahmeeinheit lösen kann. Dies wiederum unterstützt das Erreichen der vorbestimmten Rest-Masse m_re in der Aufnahmeeinheit mit hoher Genauigkeit und kurzer Verfahrensdauer. Bei jedem Rüttel-Vorgang wird die Aufnahmeeinheit zumindest einmal entgegen der Auskipprichtung und danach in Auskipprichtung gekippt. Die hierbei angefahrenen Kippwinkel w_k können für den jeweiligen Rüttel-Vorgang vorgegeben sein oder individuell eingestellt werden.

Vorzugsweise wird zum Beenden oder während des Beendens des Ablade-Vorgangs die Aufnahmeeinheit entgegen der Auskipprichtung gekippt. Hierdurch ist gewährleistet, dass bei einer detektierten Restmasse m_re in der Aufnahmeeinheit tatsächlich auch kein weiterer Anteil der Nutzlast ausgekippt wird.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:

Fig. 1    eine schematische, blockschaltbildartige Darstellung einer Arbeitsmaschine mit einer Steuereinheit zur Durchführung des Verfahrens,

Fig. 2    eine schematische Darstellung der Hubvorrichtung,

Fig. 3    ein Flussdiagramm des erfindungsgemäßen Verfahrens in einer ersten Ausführungsform,

Fig. 4    ein Flussdiagramm des erfindungsgemäßen Verfahrens in einer weiteren Ausführungsform, und

Fig. 5    ein Flussdiagramm mit weiteren Verfahrensschritten zur Anwendung bei den Verfahrensabläufen gemäß Fig. 3 und Fig. 4.

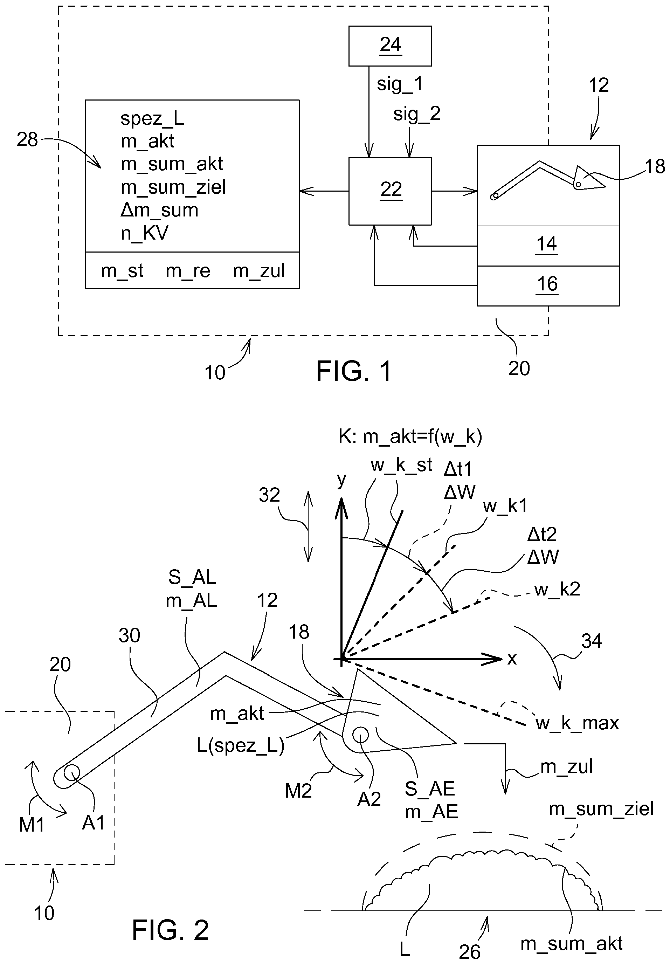

Fig. 1 zeigt schematisch einzelne Bestandteile einer Arbeitsmaschine 10 in Form eines Traktors oder Schleppers mit einer daran angeordneten Hubvorrichtung 12 in Form eines Frontladers. Die Arbeitsmaschine 10 weist eine geeignete Sensorik 14 und eine Wiegeeinrichtung 16 auf. Die Wiegeeinrichtung 16 kann eine in einer als Schaufel ausgebildeten Aufnahmeeinheit 18 befindliche, ausgewählte Nutzlast L(spez_L) wiegen. In einer weiteren Ausführungsform ist die Aufnahmeeinheit 18 beispielsweise als Ladegabel (insbesondere für Ballen) ausgebildet.

Die Sensorik 14 umfasst beispielsweise verschiedene Beschleunigungssensoren, Drucksensoren und/oder Dehnungsmessstreifen, welche an der Hubvorrichtung 12 und/oder an einer Tragstruktur 20 der Arbeitsmaschine 10 angeordnet sein können. Die Sensorik 14 kann z.B. nach Art der Sensoreinrichtung gemäß DE 10 2013 203 826 A1 ausgebildet sein. Die Wiegeeinrichtung 16 kann in einer Ausführungsform ebenfalls nach Art der Wiegeeinrichtung gemäß DE 10 2013 203 826 A1 ausgebildet und funktionell wirksam sein.

Signale bzw. Daten der Sensorik 14 und der Wiegeeinrichtung 16 werden an eine elektronische Steuereinheit 22 der Arbeitsmaschine 10 gesendet. In einer hier nicht dargestellten, weiteren Ausführungsform ist die Wiegeeinrichtung 16 Bestandteil der Steuereinheit 22. Die Steuereinheit 22 steuert die Hubvorrichtung 12 und/oder deren Aufnahmeeinheit 18 an, um ein Abladen der ausgewählten Nutzlast L(spez_L) von der Aufnahmeeinheit 18 in der noch zu beschreibenden Weise zu ermöglichen.

Im Falle einer Schaufel als Aufnahmeeinheit 18 bedeutet ein Abladen der Nutzlast L(spez_L) üblicherweise ein Auskippen der Nutzlast L(spez_L). Entsprechend kann der Ablade-Vorgang dann auch als ein Auskipp-Vorgang bezeichnet werden.

An die Steuereinheit 22 ist eine Eingabeeinheit 24 angeschlossen. Letztere ist beispielsweise als Tastatur oder Display ausgebildet und dient der Eingabe (z.B. manuell, per Sprache) von Daten durch einen Anwender, z.B. Benutzer oder Führer der Arbeitsmaschine 10. Die Eingabeeinheit 24 sendet die eingegebenen Daten als Signale sig_1 an die Steuereinheit 22. Weiterhin kann die Steuereinheit 22 Signale sig_2 empfangen. Diese Signale sig_2 repräsentieren Daten eines Informationssystems (z.B. CAN-Bus, CANFD-Bus, Ethernet, EtherCAT, LIN-Bus, FlexRay-Bus, IIC, UART)der Arbeitsmaschine 10 und ggf. weitere Daten, welche unabhängig von individuellen Dateneingaben des Anwenders bzw. Benutzers oder Führers der Arbeitsmaschine 10 zur Verfügung stehen.

Beispielsweise wählt der Anwender zwischen mindestens zwei unterschiedlichen möglichen Nutzlasten L(i), d.h. i ≥ 2, eine Nutzlast L(spez_L) aus. Die Auswahl wird in Abhängigkeit von der geplanten Ladearbeit getroffen. Der Index spez_L repräsentiert irgendein spezifisches Merkmal, mittels dessen sich die ausgewählte Nutzlast L(spez_L) von anderen auswählbaren Nutzlasten L(i) unterscheidet. Die Auswahl der jeweiligen Nutzlast L(spez_L) wird vorzugsweise mittels der Signale sig_1 an die Steuereinheit 22 mitgeteilt und dort registriert.

Beispielsweise erhält die Steuereinheit 22 mittels der Signale sig_1 eine Information über die Art der ausgewählten Nutzlast L(spez_L), z.B. eine spezifische Ballenart (Heu, Stroh, etc.) oder Ballengröße, Erdreich, Kies, spezifische Flüssigkeit, etc..

Weiterhin kann der Anwender mittels der Signale sig_1 an die Steuereinheit 22 eine Ziel-Gesamtmenge m_sum_ziel der Nutzlast L(spez_L) mitteilen, welche an einer Ladestelle 26 abgeladen werden soll. Die Ziel-Gesamtmenge m_sum_ziel kann auch von einer maximal zulässigen Zuladung abhängig sein, welche der Steuereinheit 22 über die Signale sig_1 und/oder sig_2 mitgeteilt wird.

Weiterhin gibt die Steuereinheit 22 registrierte Informationen bzw. Daten an eine Anzeigeeinheit 28 aus. Mittels der Anzeigeeinheit 28 kann der Benutzer oder Führer der Arbeitsmaschine 10 über den Verlauf der Ladetätigkeit an der Ladestelle 26 informiert werden. Grundsätzlich können mittels der Anzeigeeinheit 28 sämtliche Informationen signalisiert werden, welche in der Steuereinheit 22 und/oder in einer Speichereinheit registriert werden. Beispielsweise signalisiert die Anzeigeeinheit 28 folgende registrierte Informationen:

- die ausgewählte Nutzlast L(spez_L) und/oder ein spezifisches Unterscheidungsmerkmal spez_L zwischen unterschiedlichen Nutzlasten L(i),
- eine aktuelle Masse m_akt der in der Aufnahmeeinheit 18 aktuell befindlichen Nutzlast L(spez_L),
- eine aktuelle Gesamtmenge m_sum_akt der an der Ladestelle 26 bereits abgeladenen ausgewählten Nutzlast L(spez_L),
- die Ziel-Gesamtmenge m_sum_ziel der an der Ladestelle 26 abzuladenden ausgewählten Nutzlast L(spez_L),
- eine Differenz Δm_sum zwischen der Ziel-Gesamtmenge m_sum_ziel und der aktuellen Gesamtmenge m_sum_akt, und
- eine Anzahl n_KV bereits durchgeführter Ablade-Vorgänge bei der aktuellen Ladearbeit, wobei diese Anzahl n_KV die aktuelle Gesamtmenge m_sum_akt der an der Ladestelle 26 bereits abgeladenen ausgewählten Nutzlast L(spez_L) repräsentiert.

In Fig. 2 ist an der Ladestelle 26 die aktuelle Gesamtmenge der ausgewählten und bereits abgeladenen Nutzlast L (spez_L) als eine aktuelle Gesamtmasse m_sum_akt schematisch mit einer durchgezogenen Linie angedeutet. Die zugehörige Ziel-Gesamtmenge ist als eine Ziel-Gesamtmasse m_sum_ziel mit einer gestrichelten Linie angedeutet.

Sofern die aktuelle Ladearbeit an der Ladestelle 26 für die ausgewählte Nutzlast L(spez_L) mehrere Ablade-Vorgänge nacheinander erfordert, entspricht die Differenz Δm_sum bei dem letzten Ablade-Vorgang einer durch eben diese Differenz vorbestimmten Zuladungs-Masse m_zul. Diese vorbestimmte Zuladungs-Menge m_zul der Nutzlast L(spez_L) soll bei dem letzten Ablade-Vorgang bzw. Auskipp-Vorgang möglichst genau ausgekippt werden, um ein Überschreiten der Ziel-Gesamtmasse m_sum_ziel an der Ladestelle 26 zu vermeiden. Analoges gilt, wenn nur ein einziger Auskipp-Vorgang benötigt wird. Dann ist dieser einzige Auskipp-Vorgang auch gleichzeitig der letzte Auskipp-Vorgang.

In einer Ausführungsform der Anzeigeeinheit 28 können auch die erwähnte Zuladungs-Masse m_zul, eine noch zu beschreibende Start-Masse m_st in der Aufnahmeeinheit 18 und eine ebenfalls noch zu beschreibende Rest-Masse m_re in der Aufnahmeeinheit 18 signalisiert werden.

Fig. 2 zeigt schematisch die an der Arbeitsmaschine 10 angeordnete Hubvorrichtung 12. Letztere weist einen Ausleger 30 auf, der um eine erste Schwenkachse A1 relativ zur Arbeitsmaschine 10 schwenkbar gelagert ist. Die Aufnahmeeinheit 18 ist um eine zweite Schwenkachse A2 relativ zum Ausleger 30 schwenkbar gelagert.

Verschiedene physikalische Merkmale des Auslegers 30 und der Aufnahmeeinheit 18 können genutzt werden, um eine Masse der Nutzlast L(spez_L) in der Aufnahmeeinheit 18 zu ermitteln. Die Start-Masse m_st bzw. die aktuelle Masse m_akt können beispielsweise mittels der Sensorik 14 und bereitgestellter Algorithmen (z.B. basierend auf DE 10 2013 203 826 A1) in Abhängigkeit von den folgenden Größen ermittelt werden:
eine Masse m_AL des Auslegers 30 und dessen Schwerpunkt S_AL bezüglich der ersten Schwenkachse A1, eine Masse m_AE der Aufnahmeeinheit 18 und deren Schwerpunkt S_AE bezüglich der zweiten Schwenkachse A2, ein Drehmoment M1 um die erste Schwenkachse A1, ein Drehmoment M2 um die zweite Schwenkachse A2.

Die bewegliche Schwenklagerung der Aufnahmeeinheit 18 um die Schwenkachse A2 ermöglicht unterschiedliche Kippwinkel w_k der Aufnahmeeinheit 18 relativ zu einer Vertikalen 32, welche als eine Bezugsgerade für einen sich verändernden Kippwinkel w_k wirkt. Die Bezugsgerade entspricht der y-Achse des angedeuteten x/y-Koordinatensystems. Andere Bezugsgeraden sind denkbar, z.B. eine Horizontale, welche der x-Achse des vorgenannten Koordinatensystems entsprechen würde.

Während eines Auskipp-Vorganges wird der Kippwinkel w_k in einer Auskipprichtung 34 verändert und dadurch schrittweise größer. Vorzugsweise wird dabei der Kippwinkel w_k nach Ablauf eines definierten Zeitintervalls schrittweise neu eingestellt, wie anhand der Zeitintervalle Δt1 und Δt2, der Winkeländerungen Δw sowie der veränderten Kippwinkel w_k1 und w_k2 in dem x/y-Koordinatensystem beispielhaft dargestellt. Vorzugsweise wird zu Beginn des Auskipp-Vorgangs der Kippwinkel w_k als ein Startwinkel w_k_st relativ zu der verwendeten Bezugsgeraden (hier: vertikale y-Achse) definiert eingestellt. Diese Einstellung kann automatisch über registrierte Daten durch die Steuereinheit 22 erfolgen. Ausgehend vom Startwinkel w_k_st ist vorzugsweise auch eine maximale Winkelveränderung definiert, um ein automatisiertes Beenden des Auskipp-Vorgangs auszulösen. Bei der gewählten Bezugsgeraden in Fig. 2 handelt es sich um einen maximalen Kippwinkel w_k_max, dessen detektiertes Erreichen oder Überschreiten ein Beenden des Auskipp-Vorgangs auslöst. Bei dem maximalen Kippwinkel w_k_max ist die Aufnahmeeinheit 18 weit nach unten in Richtung der Ladestelle 26 geöffnet. Dennoch ist der maximale Kippwinkel w_k_max insbesondere derart eingestellt, dass zwischen ihm und dem mechanischen Endanschlag der Aufnahmeeinheit 18 noch ein Bewegungsspielraum existiert.

In einer bevorzugten Ausführungsform des Verfahrens greift die Steuereinheit 22 auf abgespeicherte Kalibrierdaten zu, welche ein Verhältnis zwischen einer Masse der Nutzlast L(spez_L) in der Aufnahmeeinheit 18 und einem entsprechenden Kippwinkel w_k der Aufnahmeeinheit 18 repräsentieren. Insbesondere handelt es sich bei den abgespeicherten Kalibrierdaten um die aktuelle Masse m_akt einer spezifischen Nutzlast L(spez_L) in der Aufnahmeeinheit 18 als Funktion des Kippwinkels w_k, also m_akt = f(w_k). Die Kalibrierdaten werden vorzugsweise als eine Kennlinie K oder eine Tabelle bereitgestellt. Für unterschiedliche Nutzlasten L(i) mit unterschiedlichen spezifischen Merkmalen spez_L werden üblicherweise unterschiedliche Kennlinien K bzw. Tabellen bereitgestellt.

Die Kalibrierdaten können in der Steuereinheit 22 der Arbeitsmaschine 10 abgespeichert sein oder beispielsweise über den Eingang sig_2 der Steuereinheit 22 mitgeteilt werden.

Die Steuereinheit 22 ist derart ausgestaltet, dass sie sämtliche Daten, Signale, etc. empfängt und sendet, die zur Durchführung eines Auskipp-Vorganges erforderlich sind. Insbesondere steuert die Steuereinheit 22 die Hubvorrichtung 12 und deren Aufnahmeeinheit 18 an. Hierzu werden beispielsweise Hydraulikzylinder an der Hubvorrichtung 12 betrieben.

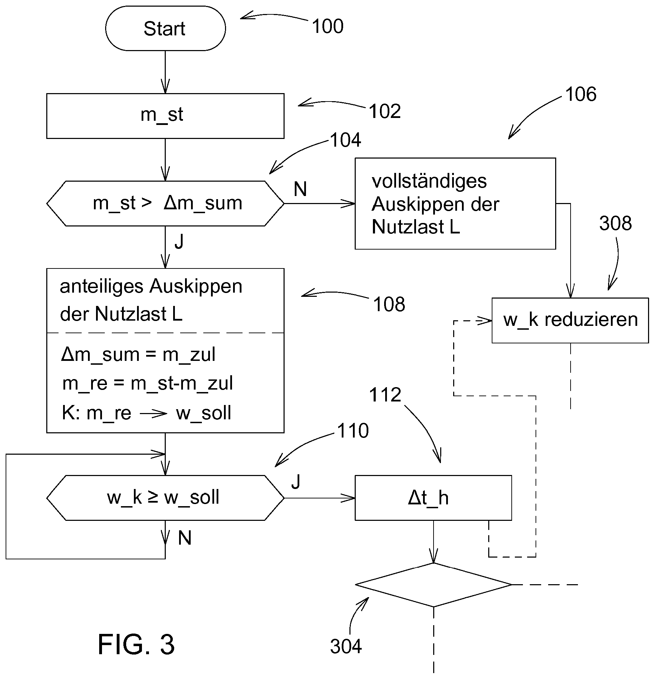

Fig. 3 zeigt wesentliche Schritte des Verfahrens in einer ersten Ausführungsform. Zu Beginn einer Ladearbeit werden dem Anwender unterschiedliche mögliche Nutzlasten L(i) angeboten, z.B. in einem Auswahlmenü eines Display (Schritt 88). Der Anwender wählt die für die aktuelle Ladearbeit vorgesehene Nutzlast L(spez_L) aus (Schritt 90).

Nach dem Schritt 90 können noch ein oder mehrere hier nicht näher dargestellte Verfahrensschritte durchgeführt werden (z.B. Aufnehmen und Transport der ausgewählten Nutzlast L(spez_L), Registrieren von Informationen, mindestens ein bereits durchgeführter Auskipp-Vorgang bei dieser Ladearbeit), bevor ein Startschritt 100 erfolgt.

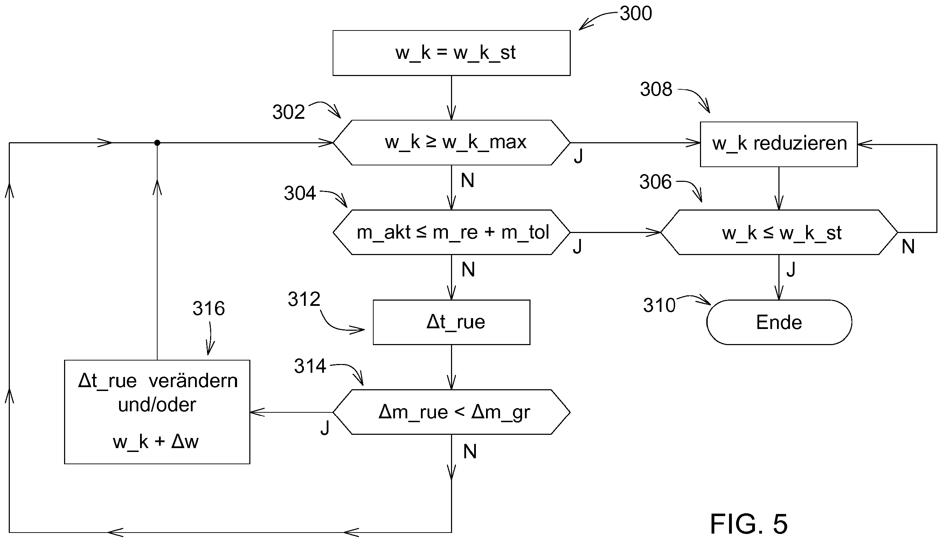

Nach dem Startschritt 100 wird im Schritt 102 die aktuelle Masse m_akt der Nutzlast L(spez_L) in der Aufnahmeeinheit 18 ermittelt. Diese Masse der Nutzlast L(spez_L) entspricht deren Start-Masse m_st unmittelbar vor Beginn eines Auskipp-Vorgangs. Im Schritt 104 wird die Start-Masse m_st mit der Differenz Δm_sum zwischen der Ziel-Gesamtmasse m_sum_ziel und der aktuellen Gesamtmasse m_sum_akt verglichen. Wenn die Start-Masse m_st nicht größer als die Differenz Δm_sum ist, kann die Nutzlast L(spez_L) während des aktuellen Auskipp-Vorganges vollständig aus der Aufnahmeeinheit 18 ausgekippt werden (Schritt 106). Danach können weitere Verfahrensschritte - insbesondere ein Schritt 308 und ein Schritt 306 gemäß Fig. 5 - erfolgen, um den Kippwinkel w_k in Richtung des Startwinkels w_k_st zu überführen und den Auskipp-Vorgang zu beenden.

Falls die Start-Masse m_st größer ist als die Differenz Δm_sum, soll die Nutzlast L(spez_L) nur anteilig, nämlich möglichst genau in Höhe der dieser Differenz Δm_sum entsprechenden Masse ausgekippt werden. Somit ist die bei diesem Auskipp-Vorgang auszukippende Zuladungs-Masse m_zul als die Differenz Δm_sum vorbestimmt (Schritt 108). Bei diesem Auskipp-Vorgang handelt es sich vorzugsweise um den letzten Auskipp-Vorgang einer Ladetätigkeit, bei dem - im Gegensatz zu den vorangegangenen Auskipp-Vorgängen mit vollständigem Auskippen - nur noch ein anteiliges Auskippen der Nutzlast L(spez_L) aus der Aufnahmeeinheit 18 erfolgen soll, um die Ziel-Gesamtmasse m_sum_ziel an der Ladestelle 26 möglichst genau zu erreichen.

Ebenfalls im Schritt 108 wird die in der Aufnahmeeinheit 18 zu verbleibende Rest-Masse m_re durch die Gleichung m_re = m_st - m_zul vorbestimmt. Aus den abgespeicherten Kalibrierdaten bzw. der Kennlinie K kann der Soll-Wert w_soll des Kippwinkels w_k vorbestimmt werden, welcher der Rest-Masse m_re in der Aufnahmeeinheit 18 entspricht (Schritt 108).

Mittels der Steuereinheit 22 wird der Kippwinkel w_k der Aufnahmeeinheit 18 solange verstellt, bis der vorbestimmte Soll-Wert w_soll erreicht oder überschritten ist (Schritt 110). Wird das Erreichen oder Überschreiten des Soll-Wertes w_soll festgestellt bzw. detektiert, entspricht dies einer indirekten Detektion der vorbestimmten Rest-Masse m_re.

Nach Ablauf einer definierten Haltezeit Δt_h für den eingestellten Soll-Wert w_soll (Schritt 112) kann in einer Verfahrensvariante der Kippwinkel w_k in Richtung des Startwinkels w_k_st zurückgeführt werden, um den Auskipp-Vorgang zu beenden. Diese Variante ist nach dem Schritt 112 als gestrichelter Pfeil in Richtung des Schrittes 308 angedeutet.

Bei einer alternativen Verfahrensvariante wird nach Ablauf der Haltezeit Δt_h in einem Schritt 304 gemäß Fig. 5 geprüft, ob bei diesem Auskipp-Vorgang auch tatsächlich die vorbestimmte Rest-Masse m_re ggf. mit einer berücksichtigten Toleranz in Form einer Toleranz-Masse m_tol (z.B. 20 kg) in der Aufnahmeeinheit 18 erreicht oder unterschritten worden ist. Falls ja, wird der Kippwinkel w_k in Richtung des Startwinkels w_k_st zurückgeführt und der Auskipp-Vorgang beendet (Schritte 306, 308, 310).

Falls bei dem Schritt 304 die vorbestimmte Rest-Masse m_re einschließlich berücksichtigter Toleranz in der Aufnahmeeinheit 18 noch nicht erreicht ist, wird in einem Schritt 312 ein Rüttel-Vorgang während einer definierten Rüttelzeitdauer Δt_rue durchgeführt. Hierbei wird die Aufnahmeeinheit 18 - abhängig von der Rüttelzeitdauer Δt_rue einmal oder mehrmals - entgegen der Auskipprichtung 34 und in Auskipprichtung 34 bewegt, um weitere Masse der Nutzlast L aus der Aufnahmeeinheit 18 auszukippen. In einem Folgeschritt 314 wird die mittels des Rüttel-Vorgangs ausgekippte Rüttel-Masse Δm_rue mit einem definierten Masse-Grenzwert Δm_gr verglichen.

Falls im Schritt 314 festgestellt wird, dass die Rüttel-Masse Δm_rue den Masse-Grenzwert Δm_gr erreicht oder überschritten hat, kann bei Durchlaufen der Schritte 302 und 304 erneut geprüft werden, ob noch weitere Masse der Nutzlast L aus der Aufnahmeeinheit 18 ausgekippt werden soll oder ob der Auskipp-Vorgang beendet werden kann (Schritte 306, 308, 310). Falls im Schritt 314 die Rüttel-Masse $\Delta$m_rue den Masse-Grenzwert $\Delta$m_gr unterschritten hat, werden im Schritt 316 weitere Maßnahmen veranlasst, nämlich die Rüttelzeitdauer $\Delta$t_rue verändert und/oder der Kippwinkel w_k vergrößert. Welche Maßnahme mit welchen physikalischen Parametern durchgeführt wird, kann von der ermittelten Differenz zwischen den beiden Werten Rüttel-Masse $\Delta$m_rue und Masse-Grenzwert $\Delta$m_gr abhängig sein. Danach werden - sofern der maximale Kippwinkel w_k_max noch nicht erreicht ist - die Schritte 302 und 304 erneut durchlaufen. Somit wird erneut geprüft, ob noch weitere Masse der Nutzlast L aus der Aufnahmeeinheit 18 ausgekippt werden soll oder ob der Auskipp-Vorgang beendet werden kann (Schritte 306, 308, 310).

Insbesondere bei einer Nutzlast L(spez_L) mit komplexen Eigenschaften (z.B. klebrig, zähfließend) mit nicht exakt wiederholbarem Auskippverhalten kann es vorteilhaft sein, zur Erhöhung der Genauigkeit des Auskipp-Vorganges das Erreichen der vorbestimmten Rest-Masse m_re und/oder das durchgeführte Auskippen der vorbestimmten Zuladungs-Masse m_zul nicht indirekt zu detektieren, wie anhand der Schritte 108, 110 gemäß Fig. 3 beschrieben.

Vielmehr kann alternativ zu dem Ablauf gemäß Fig. 3 auf Kalibrierdaten bzw. Kennlinien K verzichtet werden. Das Erreichen der vorbestimmten Rest-Masse m_re und/oder das durchgeführte Auskippen der vorbestimmten Zuladungs-Masse m_zul während eines Auskipp-Vorganges wird direkt detektiert, indem während dieses Auskipp-Vorganges die aktuelle Masse m_akt der in der Aufnahmeeinheit 18 befindlichen Nutzlast L(spez_L) ermittelt wird. Vorzugsweise wird die aktuelle Masse m_akt während des Auskipp-Vorganges mehrfach, insbesondere kontinuierlich nach Ablauf bestimmter Zeitintervalle ermittelt. Hierbei können beispielsweise die Zeitintervalle $\Delta$t1 und $\Delta$t2 für die schrittweise Verstellung des Kippwinkels w_k verwendet werden.

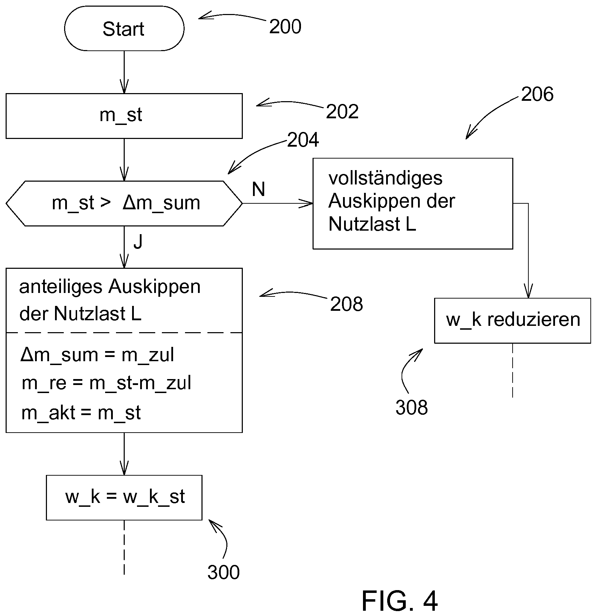

Fig. 4 zeigt wesentliche Schritte des Verfahrens in einer weiteren Ausführungsform. Dabei ist in Fig. 4 der Ablauf eines Auskipp-Vorganges dargestellt, bei dem das Erreichen der vorbestimmten Rest-Masse m_re direkt, d.h. ohne Kalibrierdaten bzw. Kennlinien K, detektiert wird. Zu Beginn einer Ladearbeit werden dem Anwender - analog zu Fig. 3 - unterschiedliche mögliche Nutzlasten L(i) angeboten, z.B. in einem Auswahlmenü eines Display (Schritt 188). Der Anwender wählt die für die aktuelle Ladearbeit vorgesehene Nutzlast L(spez_L) aus (Schritt 190).

Nach dem Schritt 190 können noch ein oder mehrere hier nicht näher dargestellte Verfahrensschritte durchgeführt werden (z.B. Aufnehmen und Transport der ausgewählten Nutzlast L(spez_L), Registrieren von Informationen, mindestens ein bereits durchgeführter Auskipp-Vorgang bei dieser Ladearbeit), bevor ein Startschritt 200 erfolgt.

Nach dem Startschritt 200 wird im Schritt 202 die aktuelle Masse m_akt der Nutzlast L(spez_L) in der Aufnahmeeinheit 18 ermittelt. Diese Masse der Nutzlast L(spez_L) entspricht deren Start-Masse m_st unmittelbar vor Beginn des Auskipp-Vorgangs. Im Schritt 204 wird die Start-Masse m_st mit der Differenz $\Delta$m_sum zwischen der Ziel-Gesamtmasse m_sum_ziel und der aktuellen Gesamtmasse m_sum_akt verglichen. Wenn die Start-Masse m_st nicht größer als die Differenz $\Delta$m_sum ist, kann die Nutzlast L(spez_L) während des aktuellen Auskipp-Vorganges vollständig aus der Aufnahmeeinheit 18 ausgekippt werden (Schritt 206). Danach können weitere Verfahrensschritte - insbesondere die Schritte 308 und 306 gemäß Fig. 5 - erfolgen, um den Kippwinkel w_k in Richtung des Startwinkels w_k_st zu überführen und den Auskipp-Vorgang zu beenden.

Falls die Start-Masse m_st größer ist als die Differenz $\Delta$m_sum, soll die Nutzlast L(spez_L) nur anteilig, nämlich möglichst genau in Höhe der dieser Differenz $\Delta$m_sum entsprechenden Masse ausgekippt werden. Somit ist die bei diesem Auskipp-Vorgang auszukippende Zuladungs-Masse m_zul als die Differenz $\Delta$m_sum vorbestimmt (Schritt 208). Bei diesem Auskipp-Vorgang handelt es sich vorzugsweise um den letzten Auskipp-Vorgang einer Ladetätigkeit, bei dem - im Gegensatz zu den vorangegangenen Auskipp-Vorgängen mit vollständigem Auskippen - nur noch ein anteiliges Auskippen der Nutzlast L(spez_L) aus der Aufnahmeeinheit 18 erfolgen soll, um die Ziel-Gesamtmasse m_sum_ziel an der Ladestelle 26 möglichst genau zu erreichen.

Ebenfalls im Schritt 208 wird die in der Aufnahmeeinheit 18 zu verbleibende Rest-Masse m_re durch die Gleichung

$$\text{m\_re = m\_st - m\_zul}$$

vorbestimmt.

Unmittelbar vor dem Auskippen entspricht die ermittelte aktuelle Masse m_akt in der Aufnahmeeinheit 18 der Start-Masse m_st (Schritte 202, 208).

Bis zu einer Vorbestimmung der auszukippenden Zuladungs-Masse m_zul und/oder einer Vorbestimmung der in der Aufnahmeeinheit 18 zu verbleibenden Rest-Masse m_re ist der Verfahrensablauf bei der Ausführungsform gemäß Fig. 4 prinzipiell gleich wie bei der Variante gemäß Fig. 3. Bei dem Verfahren gemäß Fig. 4 wird jedoch nicht ein vorbestimmter Soll-Wert w_soll des Kippwinkels w_k angefahren. Vielmehr wird der Kippwinkel w_k der Aufnahmeeinheit 18 zunächst auf den definierten Startwinkel w_k_st eingestellt (Schritt 300). Ausgehend davon wird der aktuelle Kippwinkel w_k schrittweise und in Abhängigkeit der durchgeführten und bereits erläuterten Schritte 302, 304, 312, 314, 316 vergrößert. Dabei wird der jeweils aktuelle Kippwinkel w_k der Aufnahmeeinheit 18 in Auskipprichtung 34 verändert (Schritt 316), damit ein weiterer Anteil der Nutzlast L(spez_L) aus der Aufnahmeeinheit 18 ausgekippt werden kann. Bei der gewählten Bezugsgeraden (Vertikale 32) und dem verwendeten x/y-Koordinatensystem gemäß Fig. 2 bedeutet dies, dass der aktuelle Kippwinkel w_k um einen definierten Winkelbetrag Δw vergrößert wird und dann beispielsweise w_k1 oder w_k2 beträgt. Bei anders gewählten Bezugssystemen kann der Verfahrensschritt an dieser Stelle eine Verkleinerung des aktuellen Kippwinkels w_k um einen definierten Winkelbetrag Δw erfordern.

Aufgrund der Schritte 304, 312, 314, 316 wird die während des Auskippens kontinuierlich (z.B. jeweils nach Ablauf eines Zeitintervalls Δt1, Δt2) ermittelte aktuelle Masse m_akt in der Aufnahmeeinheit 18 immer kleiner, bis im Schritt 304 festgestellt wird, dass die aktuelle Masse m_akt kleiner oder gleich der vorbestimmten Rest-Masse m_re einschließlich der Toleranz-Masse m_tol ist. Dann soll der Auskipp-Vorgang beendet werden. Hierzu wird in Schritt 308 die Aufnahmeeinheit 18 entgegen der Auskipprichtung 34 gekippt. Sofern in Schritt 316 eine Vergrößerung des aktuellen Kippwinkels w_k erfolgt war, bedeutet dies in Schritt 308, dass der zuletzt aktuelle Kippwinkel w_k um einen definierten Winkelbetrag Δw verkleinert wird. Die Winkelbeträge Δw in den Schritten 316 und 308 können identisch oder unterschiedlich sein.

Unabhängig davon, ob der Auskipp-Vorgang gemäß Fig. 3, Fig. 4 oder einer anderen Ausführungsform erfolgt, kann ein störungsfreies Ausrieseln der Nutzlast L(spez_L) aus der Aufnahmeeinheit 18 unterstützt werden, indem während des Auskippens mindestens ein Rüttel-Vorgang durchgeführt wird, bei dem die Aufnahmeeinheit 18 zumindest einmal entgegen der Auskipprichtung 34 und danach wieder in Auskipprichtung 34 gekippt wird.

Ungeachtet von der in Fig. 1 getrennt dargestellten Eingabeeinheit 24 und Anzeigeeinheit 28 können diese beiden Einheiten in einer weiteren Ausführungsform in einer einzigen Vorrichtung zusammengefasst sein. Die schematische, blockartige Darstellung der Eingabeeinheit 24, der Steuereinheit 22 und der Anzeigeeinheit 28 schließt nicht aus, dass solch eine Einheit aus mehreren Bestandteilen bestehen kann, welche physisch getrennt voneinander angeordnet sind.

Es sei darauf hingewiesen, dass einzelne Details der in den Zeichnungen dargestellten Merkmale zumindest teilweise nicht maßstäblich sind.

**Patentansprüche**

1. Verfahren zum Abladen einer Nutzlast (L) an einer Ladestelle (26), wobei die abzuladende Nutzlast (L(spez_L)) aus unterschiedlichen möglichen Nutzlasten (L(1), L(2), L(3), L(i)) ausgewählt und registriert wird, und wobei während des Verfahrens von der Steuereinheit (22) die folgenden Informationen registriert und mittels einer Anzeigeeinheit (28) signalisiert werden:

   - eine Ziel-Gesamtmenge (m_sum_ziel) der ausgewählten und an der Ladestelle (26) aus einer Aufnahmeeinheit (18) an einer Hubvorrichtung (12) einer Arbeitsmaschine (10) durch Ausschütten abzuladenden Nutzlast (L(spez_L)) als eine Ziel-Mengeneinheit,
   - eine an der Ladestelle (26) bereits abgeladene, aktuelle Gesamtmenge (m_sum_akt) der ausgewählten Nutzlast (L(spez_L)) als eine Ist-Mengeneinheit,
   - eine Anzahl (n KV) bereits durchgeführter Ablade-Vorgänge, welche einer an der Ladestelle (26) bereits abgeladenen Menge (m_sum_akt) der ausgewählten Nutzlast (L(spez_L)) entspricht,
   - eine Differenz (Δm_sum, m_zul) zwischen der Ziel-Mengeneinheit (m_sum_ziel) und der Ist-Mengeneinheit (m_sum_akt), **dadurch gekennzeichnet, dass** die Nutzlast (L(spez_L)) bei mindestens einem Ablade-Vorgang aus der Aufnahmeeinheit (18) lediglich anteilig ausgeschüttet wird, um die vorbestimmte Ziel-Gesamtmenge (m_sum_ziel) an der Ladestelle (26) zu erreichen.

2. Verfahren nach Anspruch 1, **dadurch gekennzeichnet, dass** die Ist-Mengeneinheit und die Ziel-Mengeneinheit jeweils eine natürliche Zahl ist.

3. Verfahren nach Anspruch 1 oder 2, **dadurch gekennzeichnet, dass** die Ist-Mengeneinheit und die Ziel-Mengeneinheit jeweils eine Gewichts- oder Masse-Einheit ist.

4. Verfahren nach einem der vorhergehenden Ansprüche, **dadurch gekennzeichnet, dass** mindestens ein Ablade-Vorgang in Abhängigkeit von mindestens einer der folgenden Bedingungen beendet wird:

   - der Detektion einer vorbestimmten Rest-Masse (m_re) der in der Aufnahmeeinheit (18) noch befindlichen Nutzlast (L(spez_L)),
   - der Detektion einer während dieses Ablade-Vorganges ausgeschütteten, vorbestimmten Zuladungs-Masse (m_zul).

5. Verfahren nach einem der vorhergehenden Ansprüche, **dadurch gekennzeichnet, dass** eine Masse (m_akt, m_st, m_re) der in oder an der Aufnahmeeinheit (18) befindlichen Nutzlast (L(spez_L)) ermittelt und als eine Information registriert wird.

6. Verfahren nach Anspruch 5, **dadurch gekennzeichnet, dass** die Masse der Nutzlast (L(spez_L)) ermittelt wird

- als eine Start-Masse (m_st) der vor dem Ablade-Vorgang in oder an der Aufnahmeeinheit (18) befindlichen Nutzlast (L(spez_L)), und/oder
- als eine aktuelle Masse (m akt) der während des Ablade-Vorganges in oder an der Aufnahmeeinheit (18) befindlichen Nutzlast (L(spez_L)).

7. Verfahren nach einem der Ansprüche 4 bis 6, **dadurch gekennzeichnet, dass** die Rest-Masse (m_re) in Abhängigkeit von der ermittelten Start-Masse (m_st) vorbestimmt wird.

8. Verfahren nach einem der Ansprüche 4 bis 7 , **dadurch gekennzeichnet, dass** die Rest-Masse (m re) in Abhängigkeit von der vorbestimmten Zuladungs-Masse (m_zul) vorbestimmt wird.

9. Verfahren nach einem der Ansprüche 4 bis 8, **dadurch gekennzeichnet, dass** vor dem Beenden des Ablade-Vorganges die aktuelle Masse (m_akt) der in der Aufnahmeeinheit (18) befindlichen Nutzlast (L(spez_L)) mit der vorbestimmten Rest-Masse (m_re) verglichen wird.

10. Verfahren nach einem der vorhergehenden Ansprüche, **dadurch gekennzeichnet, dass** während des Ablade-Vorganges ein Kippwinkel (w_k) der Aufnahmeeinheit (18) relativ zu einer Bezugsgeraden (32) in einer Auskipprichtung (34) verändert wird.

11. Verfahren nach einem der Ansprüche 5 bis 10, **dadurch gekennzeichnet, dass** die Ermittlung der Masse (m_akt) der Nutzlast (L(spez_L)) und/oder die Veränderung des Kippwinkels (w_k) während des Ablade-Vorganges jeweils nach Ablauf eines definierten Zeitintervalls (Δt1, Δt2) erfolgt.

12. Verfahren nach Anspruch 10 oder 11, **dadurch gekennzeichnet, dass** die vorbestimmte Rest-Masse (m_re) und/oder die vorbestimmte Zuladungs-Masse (m_zul) in Abhängigkeit von einem während des Ablade-Vorganges erreichten Soll-Wert (w_soll) des Kippwinkels (w_k) der Aufnahmeeinheit (18) detektiert wird.

13. Verfahren nach Anspruch 12, **dadurch gekennzeichnet, dass** der Soll-Wert (w_soll) des Kippwinkels (w_k) von bereitgestellten Kalibrierdaten (K) abgeleitet wird.

14. Verfahren nach Anspruch 13, **dadurch gekennzeichnet, dass** Kalibrierdaten (K) ein Verhältnis zwischen einer Masse (m_akt) der Nutzlast (L(spez_L)) und einem Kippwinkel (w_k) der Aufnahmeeinheit (18) relativ zu einer Bezugsgeraden (32) repräsentieren.

15. Verfahren nach einem der vorhergehenden Ansprüche, **dadurch gekennzeichnet, dass** zum Beenden oder während des Beendens des Ablade-Vorgangs die Aufnahmeeinheit (18) entgegen der Auskipprichtung (34) gekippt wird.

## Claims

1. Method for unloading a payload (L) at a loading station (26), wherein the payload (L(spez_L)) to be unloaded is selected from different possible payloads (L(1), L(2), L(3), L(i)) and registered, and wherein during the method the following items of information are registered by the control unit (22) and signalled by means of a display unit (28):

    - a total target quantity (m_sum_ziel) of the selected payload (L(spez_L)) to be unloaded at the loading station (26) from a picking unit (18) on a lifting device (12) of a work machine (10) by shaking as a target quantity unit,
    - a current total quantity (m_sum_akt) of the selected payload (L(spez_L)) that has already been unloaded at the loading station (26) as an actual quantity unit,
    - a number (n_KV) of already performed unloading procedures, which corresponds to a quantity (m_sum_akt) of the selected payload (L(spez_L)) that has already been unloaded at the loading station (26),
    - a difference (Δm_sum, m_zul) between the target quantity unit (m_sum_ziel) and the actual quantity unit (m_sum_akt), **characterized in that** the payload (L(spez_L)) is only proportionately shaken out of the picking unit (18) during at least one unloading procedure in order to achieve the predetermined total target quantity (m_sum_ziel) at the loading station (26).

2. Method according to Claim 1, **characterized in that** the actual quantity unit and the target quantity unit are each a natural number.

3. Method according to Claim 1 or 2, **characterized in that** the actual quantity unit and the target quantity unit are each a unit of weight or mass.

4. Method according to any one of the preceding claims, **characterized in that** at least one unloading procedure is terminated depending on at least one of the following conditions:

    - the detection of a predetermined residual mass (m_re) of the payload (L(spez_L)) that is still in the picking unit (18),
    - the detection of a predetermined payload mass (m_zul) that has been shaken out during this unloading procedure.

5. Method according to any one of the preceding claims, **characterized in that** a mass (m_akt, m_st, m_re) of the payload (L(spez_L)) that is located in or on the picking unit (18) is determined and registered as information.

6. Method according to Claim 5, **characterized in that** the mass of the payload (L(spez_L)) is determined

   - as a starting mass (m_st) of the payload (L(spez_L)) located in or on the picking unit (18) before the unloading procedure, and/or
   - as a current mass (m_akt) of the payload (L(spez_L)) located in or on the picking unit (18) during the unloading procedure.

7. Method according to any one of Claims 4 to 6, **characterized in that** the residual mass (m_re) is predetermined depending on the determined starting mass (m_st).

8. Method according to any one of Claims 4 to 7, **characterized in that** the residual mass (m_re) is predetermined depending on the predetermined payload mass (m_zul).

9. Method according to any one of Claims 4 to 8, **characterized in that**, before the end of the unloading procedure, the current mass (m_akt) of the payload (L(spez_L)) in the picking unit (18) is compared with the predetermined residual mass (m_re).

10. Method according to any one of the preceding claims, **characterized in that** during the unloading procedure a tilt angle (w_k) of the picking unit (18) relative to a straight reference line (32) is varied in a tipping out direction (34).

11. Method according to any one of Claims 5 to 10, **characterized in that** the determination of the mass (m_akt) of the payload (L(spez_L)) and/or the change in the tilt angle (w_k) during the unloading procedure is carried out after each expiry of a defined time interval (Δt1, Δt2).

12. Method according to Claim 10 or 11, **characterized in that** the predetermined residual mass (m re) and/or the predetermined payload mass (m_zul) is/are detected depending on a target value (w_soll) of the tilt angle (w_k) of the picking unit (18) that is reached during the unloading procedure.

13. Method according to Claim 12, **characterized in that** the target value (w_soll) of the tilt angle (w_k) is derived from provided calibration data (K).

14. Method according to Claim 13, **characterized in that** calibration data (K) represent a ratio between a mass (m_akt) of the payload (L(spez_L)) and a tilt angle (w_k) of the picking unit (18) relative to a straight reference line (32).

15. Method according to any one of the preceding claims, **characterized in that**, in order to terminate or during the termination of the unloading procedure, the picking unit (18) is tilted opposite to the tipping out direction (34).

**Revendications**

1. Procédé de déchargement d'une charge utile (L) à un point de chargement (26), dans lequel la charge utile (L(spez_L)) à décharger est sélectionnée parmi différentes charges utiles (L(1), L(2), L(3), L(i)) possibles et enregistrée, et dans lequel pendant le procédé, l'unité de commande (22) enregistre les informations suivantes et les signale au moyen d'une unité d'affichage (28) :

   - une quantité totale cible (m_sum_ziel) de la charge utile (L(spez_L)) sélectionnée et à décharger par déversement au point de chargement (26) à partir d'une unité de réception (18) au niveau d'un dispositif de levage (12) d'une machine de travail (10), comme une unité de quantité cible,
   - une quantité totale actuelle (m_sum_akt) de la charge utile (L(spez_L)) sélectionnée déjà déchargée au point de chargement (26), comme une unité de quantité réelle,
   - un nombre (n_KV) d'opérations de déchargement déjà effectuées, qui correspond à une quantité (m_sum_akt), déjà déchargée au point de chargement (26), de la charge utile (L(spez_L)) sélectionnée,
   - une différence (Δm_sum, m_zul) entre l'unité de quantité cible (m_sum_ziel) et l'unité de quantité réelle (m_sum_akt),

   **caractérisé en ce que** la charge utile (L(spez_L)) n'est déversée que proportionnellement à l'occasion d'au moins une opération de déchargement à partir de l'unité de réception (18) afin d'atteindre la quantité totale cible (m_sum_ziel) prédéterminée au point de chargement (26).

2. Procédé selon la revendication 1, **caractérisé en ce que** l'unité de quantité réelle et l'unité de quantité cible sont respectivement des nombres naturels.

3. Procédé selon la revendication 1 ou 2, **caractérisé en ce que** l'unité de quantité réelle et l'unité de quantité cible sont respectivement une unité de poids ou une unité de masse.

4. Procédé selon l'une quelconque des revendications précédentes, **caractérisé en ce qu'**au moins une opération de déchargement est achevée en fonction d'au moins l'une des conditions suivantes :

- la détection d'une masse résiduelle (m_re) prédéterminée de la charge utile (L(spez_L)) restant dans l'unité de réception (18),
- la détection d'une masse de complément de charge (m_zul) prédéterminée, déversée pendant cette opération de déchargement.

5. Procédé selon l'une quelconque des revendications précédentes, **caractérisé en ce qu'**une masse (m_akt, m_st, m_re) de la charge utile (L(spez_L)) se trouvant dans ou au niveau de l'unité de réception (18) est déterminée et enregistrée sous forme d'information.

6. Procédé selon la revendication 5, **caractérisé en ce que** la masse de la charge utile (L(spez_L)) est déterminée

- comme une masse de départ (m_st) de la charge utile (L(spez_L)) se trouvant dans ou au niveau de l'unité de réception (18) avant l'opération de déchargement, et/ou
- comme une masse actuelle (m_akt) de la charge utile (L(spez_L)) se trouvant dans ou au niveau de l'unité de réception (18) pendant l'opération de déchargement.

7. Procédé selon l'une quelconque des revendications 4 à 6, **caractérisé en ce que** la masse résiduelle (m_re) est prédéterminée en fonction de la masse de départ (m_st) déterminée.

8. Procédé selon l'une quelconque des revendications 4 à 7, **caractérisé en ce que** la masse résiduelle (m_re) est prédéterminée en fonction de la masse de complément de charge prédéterminée (m_zul).

9. Procédé selon l'une quelconque des revendications 4 à 8, **caractérisé en ce qu'**avant l'achèvement de l'opération de déchargement, la masse actuelle (m_akt) de la charge utile (L(spez_L)) se trouvant dans l'unité de réception (18) est comparée avec la masse résiduelle prédéterminée (m_re).

10. Procédé selon l'une quelconque des revendications précédentes, **caractérisé en ce que** pendant l'opération de déchargement, un angle de basculement (w_k) de l'unité de réception (18) par rapport à une droite de référence (32) varie dans une direction de basculement (34) .

11. Procédé selon l'une quelconque des revendications 5 à 10, **caractérisé en ce que** la détermination de la masse (m_akt) de la charge utile (L(spez_L)) et/ou la variation de l'angle de basculement (w_k) pendant l'opération de déchargement sont respectivement effectuées après expiration d'un intervalle de temps défini ($\Delta t1$, $\Delta t2$).

12. Procédé selon la revendication 10 ou 11, **caractérisé en ce que** la masse résiduelle prédéterminée (m_re) et/ou la masse de complément de charge prédéterminée (m_zul) est/sont détectée(s) en fonction d'une valeur théorique (w_soll) de l'angle de basculement (w_k) de l'unité de réception (18), atteinte pendant l'opération de déchargement.

13. Procédé selon la revendication 12, **caractérisé en ce que** la valeur théorique (w_soll) de l'angle de basculement (w_k) est dérivée à partir de données d'étalonnage (K) fournies.

14. Procédé selon la revendication 13, **caractérisé en ce que** des données d'étalonnage (K) représentent un rapport entre une masse (m_akt) de la charge utile (L(spez_L)) et un angle de basculement (w_k) de l'unité de réception (18) par rapport à une droite de référence (32) .

15. Procédé selon l'une quelconque des revendications précédentes, **caractérisé en ce que** pour l'achèvement ou pendant l'achèvement de l'opération de déchargement, l'unité de réception (18) est amenée à basculer à l'opposé de la direction de basculement (34).

FIG. 1

FIG. 2

Start — 100

m_st — 102

— 104

m_st > Δm_sum — N → vollständiges Auskippen der Nutzlast L — 106

J

anteiliges Auskippen der Nutzlast L — 108

Δm_sum = m_zul
m_re = m_st-m_zul
K: m_re → w_soll

308

w_k reduzieren

w_k ≥ w_soll — 110 — J → Δt_h — 112

N

304

FIG. 3

Start ——— 200

m_st ——— 202

——— 204

m_st > Δm_sum

N ⟶ vollständiges Auskippen der Nutzlast L ——— 206

J

anteiliges Auskippen der Nutzlast L ——— 208

Δm_sum = m_zul
m_re = m_st-m_zul
m_akt = m_st

w_k reduzieren

308

w_k = w_k_st

300

FIG. 4

FIG. 5

**EP 3 628 986 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013203826 A1
- US 20160047689 A1